# EUROPEAN PATENT APPLICATION

(11) **EP 4 635 465 A1**
(43) Date of publication of application: **22.10.2025**
(21) Application number: 23902268.4
(22) Date of filing: 17.10.2023
(51) Int. Cl.: A61H 23/02

(54) **MASSAGE APPARATUS**

(30) Priority: 14.12.2022 CN 202211607078
(71) Applicant: SHENZHEN YUYI ELECTRONIC TECHNOLOGY CO., LTD., Shenzhen, Guangdong 518000 (CN)
(72) Inventor: ZHOU, Ying, Shenzhen, Guangdong 518000 (CN); LI, Bing, Shenzhen, Guangdong 518000 (CN)
(74) Representative: SSM Sandmair
(86) International application number: PCT/CN2023/124841
(87) International publication number: WO 2024/125066

(57) **Abstract**

Provided is a massage apparatus, comprising: a driver (910), a connecting rod (800), a massage member (940), an adjusting mechanism, an eccentric wheel (500), and a sliding member (600). An output end of the driver (910) is connected to the eccentric wheel (500) so as to drive the eccentric wheel (500) to rotate. The sliding member (600) is arranged on one side of the axis of the eccentric wheel (500) and can move radially relative to the axis of the eccentric wheel (500). The movement of the adjusting mechanism actuates the sliding member (600) to move radially relative to the axis of the eccentric wheel (500). The sliding member (600) is connected to a central end (810) of the connecting rod (800) so as to adjust the distance between the central end (810) of the connecting rod (800) and the axis of the eccentric wheel (500). A traction end (820) of the connecting rod (800) is connected to the massage member (940). The massage apparatus allows the connection center of the connecting rod (800) to move close to or far from the rotation center of a motor in both working and non-working states of a fascia gun by means of adjusting the radial distance between the connection center of the connecting rod (800) and the rotation center of the motor, so as to make changes in the radial size of the eccentric wheel and thus adjust the movement depth of the massage member (940).

## Description

### FIELD OF THE INVENTION

The present invention relates to the field of medical and healthcare devices, and more particularly, to a massage apparatus.

### BACKGROUND OF THE INVENTION

Massage apparatuses are now common tools for helping people relax and maintain health. For example, fascia guns are even excellent tools that can be used to aid in stretching and recovery after exercise. There are often unavoidable aches and pains in life. Whether professional athletes or ordinary leisure enthusiasts, must have had experiences of muscle soreness. Fascia guns mainly massage large muscle groups through vibration, relax the fascia, and reduce soreness. Both professional athletes and amateur fitness enthusiasts can use them, making training more effective. Fascia guns utilize vibration frequency to relieve muscle spasms, increase blood flow, and significantly shorten muscle recovery time.

The existing fascia gun includes a motor shaft connected to an eccentric wheel, and the eccentric wheel is rotatably connected to a driving link. Either end of the driving link is connected to the motor shaft and a massage head. The rotation of the motor shaft, through the eccentric wheel and the driving link, causes the massage head to move forward and backward to perform high-frequency tapping on the human body. However, this commonly used structure has only one massage force and amplitude, and can only achieve a single massage dept. Due to the difference in the thickness of the fascial layer in various sections of the human body such as the head, hands, legs, buttocks, back, etc., the depths of the fascia layers in different positions vary. Therefore, the massage depth of the massage head also needs to be adjusted accordingly. However, traditional massage guns cannot make such adjustments.

Therefore, it is necessary to provide a massage apparatus that can solve the problem that existing massage apparatuses on the market, such as fascia guns, cannot adjust the movement depth of the massage head.

### BRIEF SUMMARY OF THE INVENTION

### TECHNICAL PROBLEM

An object of the present invention aims to provide a massage apparatus with an adjustable massage depth.

### TECHNICAL SOLUTION

In order to obtain the object of the present invention, the following technical solutions are provided:
a massage apparatus comprises: a driver, a driving link, a massage member, an adjusting mechanism, an eccentric wheel, and a slider; an output end of the driver is coupled to the eccentric wheel to drive the eccentric wheel to rotate, the slider is arranged on one side of an axis of the eccentric wheel and can move radially relative to the axis of the eccentric wheel; a motion of the adjusting mechanism drives the slider to move radially relative to the axis of the eccentric wheel; the slider is connected with a center end of the driving link to adjust a distance between the center end of the driving link and the axis of the eccentric wheel, and a pulling end of the driving link is connected with the massage member.

The application discloses a radial dimension of the center end of the driving link and a rotation center of the driver can be adjusted through the cooperation of the adjusting mechanism and the slider, so that the center end of the driving link is close to or far away from the rotation center of the motor, thereby realizing a dimension change of the eccentric radius, so as to adjust a movement depth of the massage member and meet the different massage needs of users, and be very flexible and convenient. The distance between the rotation center of the driver and the center end of the driving link determines how large the circular motion of the diameter it does, thereby determining the depth of the reciprocating motion of the front massage member, and a spatial dimension of the linear reciprocating motion is determined by the radial dimensions of the driving link and the center of the rotation center of the driver.

In some specific embodiments, a top end of the slider is connected to a shaft hole of the center end of the driving link. The driver adopts a drive motor.

In some embodiments, the adjusting mechanism comprises an axial adjusting assembly and an adjustment seat, the axial adjusting assembly can drive the adjustment seat to move along an axial direction to adjust an axial distance between the adjustment seat and the eccentric wheel, and at the same time, the eccentric wheel and the adjustment seat rotate circumferentially synchronously as a whole in the working state. The adjustment seat is provided with a wedge block on one side of the axis, and the wedge block is provided with an outwardly inclined slope. The slider is arranged on the slope of the wedge block and can move relatively along the slope. Due to the arrangement of the slope, the movement of the slider can be decomposed into an axial up-and-down movement and radial inward-outward movement. That is, the slider moves radially along with the axial movement of the adjustment seat. In other words, when the eccentric wheel and the adjustment seat rotate as a whole, the radial movement of the slider changes with the axial movement of the adjustment seat, the slider dives the driving link to cause a radial dimension change of a distance from the driving link to the rotation center of the motor, thereby achieving the depth adjustment of the linear movement of the massage member.

In some embodiments, the axial adjustment assembly includes an adjustment gear disk and an adjustment ring. The adjustment ring is sleeved in the adjustment gear disk, and the adjustment gear disk and the adjustment ring are in threaded engagement, allowing the adjustment gear disk and the adjustment ring to rotate relatively in the circumferential direction while moving relatively in the axial direction. The adjustment seat is located in the adjustment ring and can move along the axial direction with the adjustment ring.

In some embodiments, a positioning frame is provided on one side of the axis of the eccentric wheel, and the slider is arranged in the positioning frame so that the slider rotates synchronously with the eccentric wheel.

In some embodiments, the output end of the driver is coupled to a drive rotating shaft; the eccentric wheel, the adjustment seat, the adjustment ring, and the adjustment gear disk are all sleeved on the drive rotating shaft; and the eccentric wheel and the adjustment seat can rotate synchronously with the drive rotating shaft. In specific embodiments, the drive rotating shaft and the driver can be designed as two separate components or directly designed as an integrated structure.

In some embodiments, the axial adjustment assembly further includes an adjustment knob, which is provided with external teeth that mesh with external teeth of the adjustment gear disk.

In some embodiments, a collar is provided between the drive rotating shaft and the adjustment seat. A positioning cooperation between the adjusting seat and the collar enables the collar and the adjusting ring to rotate synchronously relative to the drive rotating shaft. The adjustment seat is also provided with a bearing sleeved between the drive rotating shaft and the adjustment seat, so that the adjustment seat can perform a radial movement around the rotation center of the drive rotating shaft. Bearings are also provided in the center end of the driving link connected with the slider and in the pulling end of the driving link connected with the massage member.

In some embodiments, the massage apparatus further includes a bracket, and the bracket is provided with a hollow central shaft. The drive rotating shaft passes through the central shaft, that is, the central shaft is sleeved outside the drive rotating shaft. The adjusting mechanism and the adjustment seat are arranged in the bracket and sleeved on the central shaft.

In some embodiments, a groove is defined on the outer peripheral wall of the central shaft, and a protrusion is provided inside the collar, which cooperates with the groove on the outer periphery of the central shaft, so that the collar and the adjustment seat can move axially relative to the central shaft synchronously.

In some embodiments, the eccentric wheel and the drive rotating shaft are positioned in cooperation via a radially inserted pin or screw, enabling the eccentric wheel to rotate synchronously with the drive rotating shaft.

In some embodiments, the massage apparatus further includes a piston, a shock-absorbing sleeve, and a housing. The pulling end of the driving link is connected to one end of the piston, and the massage member is sleeved in the piston and moves along with the piston. The piston is arranged in the housing and can be partially exposed outside the housing, and the shock-absorbing sleeve is provided between the piston and the housing. The length of the piston extending outside the housing is matched with the maximum distance between the center end of the driving link and the rotation center of the driver, which can be the same length as the maximum distance or longer than the maximum distance, thereby allowing the massage member to have sufficient space for adjustable movement depth. The distance between the rotation center of the driver and the center end of the driving link determines the diameter of the circular motion it can make, which determines the depth of the reciprocating motion of the front piston, and the spatial distance of the linear reciprocating motion, and is determined by the radial distance of the driving link and the rotation center of the driver.

In some embodiments, the massage apparatus further includes a PCBA board, buttons, a panel, a handle, and a battery. The housing includes an upper shell and a lower shell. The PCBA board, buttons, and panel are arranged in the upper shell; the handle is connected to the lower shell; the battery is arranged in the handle; and a shock-absorbing pad is provided at the connection between the handle and the lower shell.

### ADVANTAGES

Compared with the prior art, the present application has the following advantages:
the present application can adjust the radial dimension between the connection center of the driving link and the rotation center of the motor in both working and non-working states of the fascia gun, so that the connection center of the driving link is close to or far from the rotation center of the motor, thereby realizing the dimension change of the eccentric radius, so as to adjust the movement depth of the massage member and meet the different massage needs of users. Since the depth of the skin fascia layer varies in different parts of the body, the required massage depth is also different when acting on different parts. Therefore, the technical solution of the present application can adjust the spatial dimension of the massage depth, meet the demand for adjusting the massage depth, and is very flexible and convenient.

### BRIEF DESCRIPTION OF THE DRAWINGS

FIG. 1 is an exploded view of a massage apparatus of the present invention;
FIG. 2 is a cross-sectional view of the massage apparatus of the present invention;
FIG. 3 illustrates movement of the adjusting mechanism and the driving link in the massage apparatus of the present invention;
FIG. 4 is a cross-sectional view of the adjusting mechanism of the massage apparatus in a first state of the present invention;
FIG. 5 illustrate the eccentric wheel and the adjustment seat of the massage apparatus in the first state of the present invention;
FIG. 6 is a cross-sectional view of the adjusting mechanism of the massage apparatus in a second state of the present invention;
FIG. 7 illustrates the eccentric wheel and the adjustment seat of the massage apparatus in the second state of the present invention;
FIG. 8 illustrates the adjustment seat and the central shaft of the massage apparatus of the present invention;
FIG. 9 is a cross-sectional view of the adjustment assembly of the massage apparatus of the present invention;
FIG. 10 is an exploded view of the adjustment assembly of the massage apparatus of the present invention;
FIG. 11 is a cross-sectional view of the adjustment ring in corporation with the collar of the massage apparatus of the present invention;
FIG. 12 is a cross-sectional view of the massage apparatus in the first state of the present invention; and
FIG. 13 a cross-sectional view of the massage apparatus in the second state of the present invention.

### DETAILED DESCRIPTION OF THE INVENTION

Exemplary embodiments of the present invention will be described in more detail below with reference to the accompanying drawings. Although exemplary embodiments of the present invention are shown in the drawings, it should be understood that the present invention may be implemented in various forms and should not be limited to the embodiments below. These embodiments are intended to enable those skilled in the art to understand the present invention more thoroughly.

It will be understood that the followings words used herein is for the purpose of describing particular example embodiments only and is not intended to be limiting. As used herein, the singular forms "a," "an," and "the" are intended to include the plural forms as well, unless the context clearly dictates otherwise. The terms "comprise", "include", "contain" and "have" are inclusive and thus indicate the presence of stated feature, element and/or part but do not exclude the presence or addition of one or various other features, elements, component, and/or combinations thereof. The method steps, processes, and operations described in the text are not interpreted as necessarily requiring them to be performed in the specific order described or illustrated, unless the order of execution is clearly specified. It should also be understood that additional or alternative steps may be used.

Although the terms first, second, third, etc. may be used in the description or claims to describe various elements, components, regions, layers and/or sections, these elements, components, regions, layers and/or sections shall not be referred to as restricted by these terms. These terms are only used to distinguish one element, component, region, layer or section from another region, layer or section. Terms such as "first," "second," and other numerical terms when used in the description or claims do not imply a sequence or order unless clearly indicated by the context. Thus, a first element, component, region, layer or section discussed below could be termed a second element, component, region, layer or section without departing from the teachings of the example embodiments.

For convenience of description, spatially relative terms may be used herein to describe the relationship of one element or feature to another element or feature as illustrated in the figures. These relative terms, such as "inner", "outer", "inside", "outside", "below", "under", "above", "on", "front", "rear", etc. Such spatially relative terms are intended to cover different orientations of the device in use or operation in addition to the orientation depicted in the figures. For example, if the device in the figures is turned over, elements described as "below" or "under" other elements or features would then be oriented "above" or "on" the other elements or features. Thus, the exemplary term "below" can encompass both an orientation of above and below. The device may be otherwise oriented (rotated 90 degrees or at other orientations) and the spatially relative terms used are interpreted accordingly.

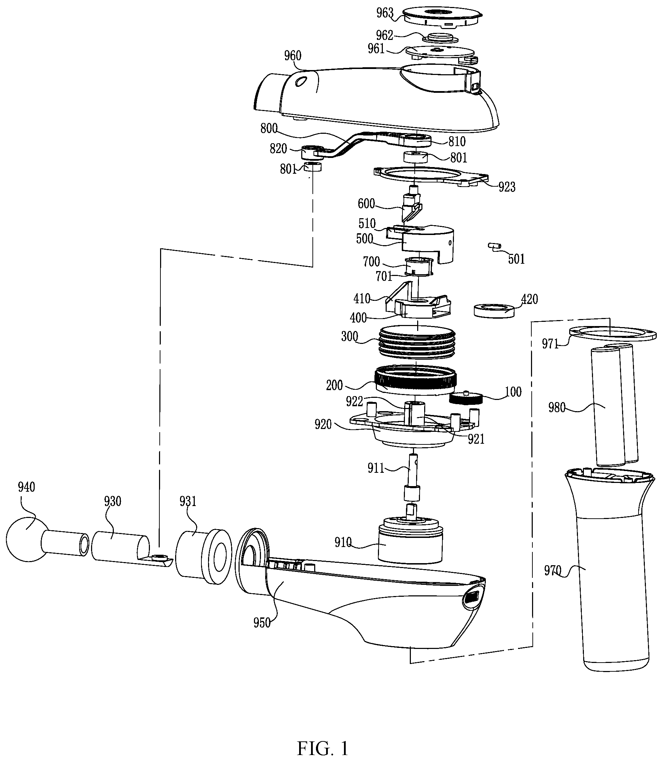

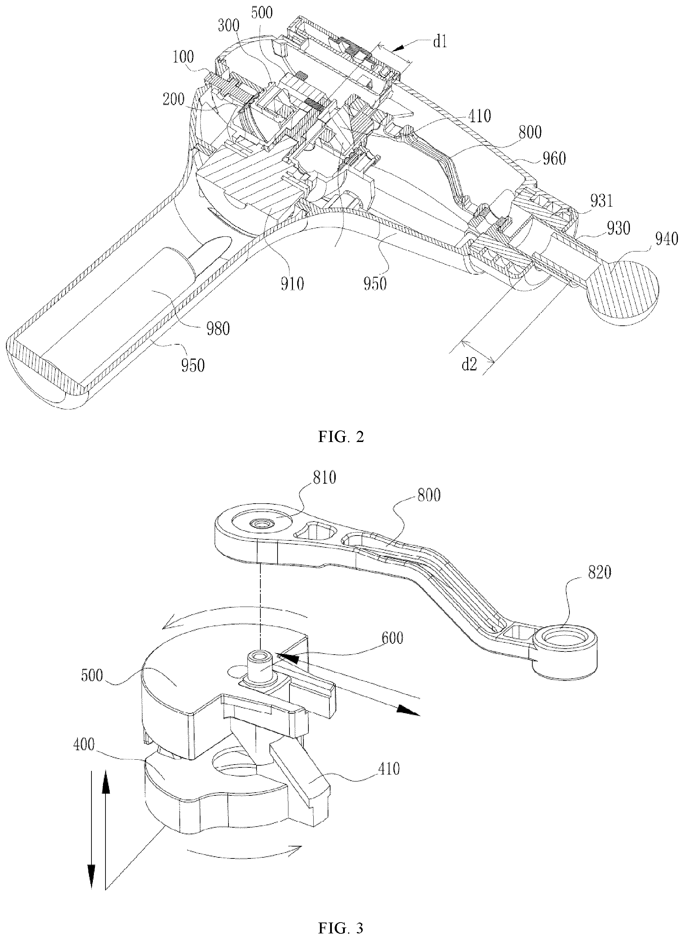

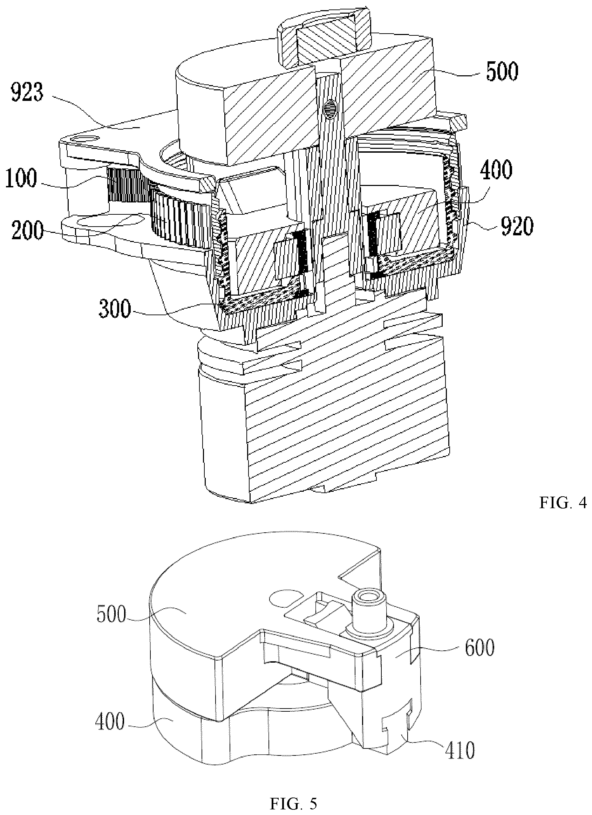

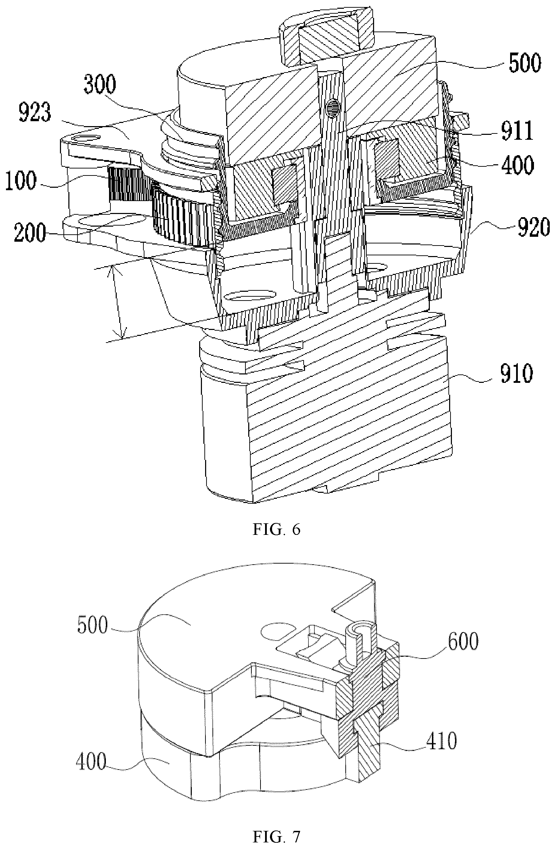

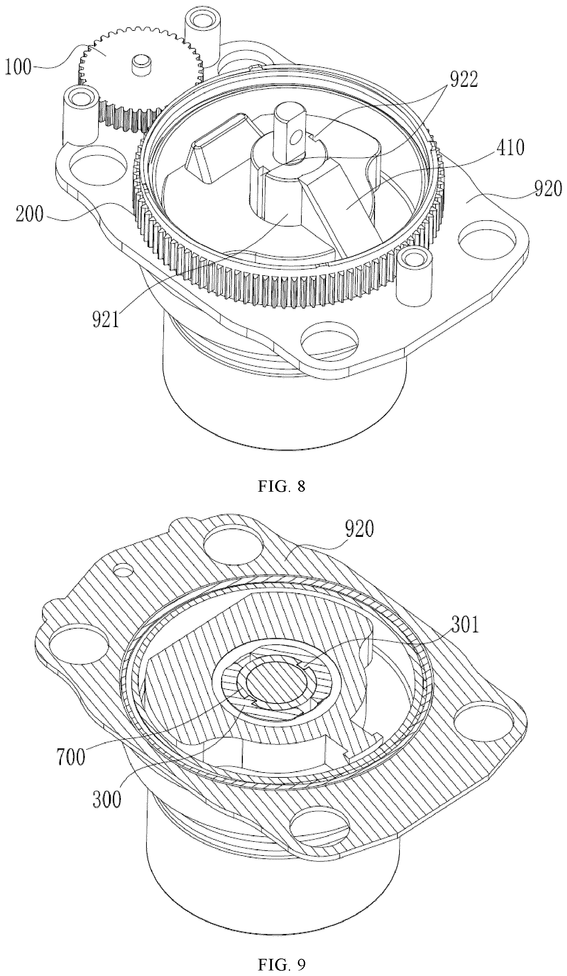

Please refer to FIGS. 1 to 9, a massage apparatus in accordance with an embodiment of the present invention includes a driver 910, a driving link 800, a massage member 940, an adjusting mechanism, an eccentric wheel 500, and a slider 600. The driver 910 in this embodiment adopts a driving motor. An output end of the driver 910 is coupled to a drive rotating shaft 911. The drive rotating shaft 911 is connected to the eccentric wheel 500 to drive the eccentric wheel 500 to rotate. The slider 600 is disposed at one side of an axis of the eccentric wheel 500 and can move in a radial direction relative to the axis of the eccentric wheel 500. The movement of the adjusting mechanism drives the slider 600 to move in the radial direction relative to the axis of the eccentric wheel 500. The slider 600 is connected to a center end 810 of the driving link 800 to change a distance between the center end 810 of the driving link 800 and the axis of the eccentric wheel 500. A pulling end 820 of the driving link 800 is connected to the massage member 940. The axial and the radial direction are defined herein just for convenience of description, where the axial direction refers to the direction of the rotation center of the output end of the driver 910. The radial direction refers to the direction that intersects radially with the rotation center and is usually also the direction that is consistent with the motion direction of the massage member 940. Specifically, the driver 910 outputs the rotating power to make the eccentric wheel 500 rotate; the slider 600 rotates synchronously with the eccentric wheel 500, and drives the center end 810 of the driving link 800 to rotate around the rotation center of the driver. The pulling end 820 of the driving link 800 is rotatably connected with the massage member 940, so that the massage member 940 moves along the direction consistent with the radial direction, therefore, a motion depth of the massage member 940 can be changed by changing a distance between the center end 810 of the driving link 800 and the axis of the drive rotating shaft, that is, the motion depth ***d₂*** of the massage member 940 can be changed by adjusting a distance ***d₁*** between the slider 600 and the rotation center of the driver in the application.

In this application, through the cooperation of the adjusting mechanism and the slider 600, a radial dimension between the center end 810 of the driving link 800 and the rotation center of the driver 910 can be adjusted, so that the center end 810 of the driving link 800 is close to or away from the motor rotation center, thereby realizing eccentric radial dimension change, so as to adjust the movement depth of the massage member 940 and meet the different massage needs of users, which is very flexible and convenient. The distance between the rotation center of the driver 910 and the center end 810 of the driving link 800 determines the diameter of the circular motion of the center end 810, thereby determining the dimensional depth of the reciprocating motion of the front massage member 940. The spatial dimension of the linear reciprocating motion is determined by the radial dimension between the driving link 800 and the rotation center of the driver 910.

In this embodiment, the adjusting mechanism comprises an axial adjustment assembly and an adjustment seat 400. The axial adjustment assembly can drive the adjustment seat 400 to move axially to change an axial distance between the adjustment seat 400 and the eccentric wheel 500. Meanwhile, the eccentric wheel 500 and the adjustment seat 400 perform a synchronous circular motion in a working state. The adjustment seat 400 is provided with a wedge block 410 on one side of the axis. The wedge block 410 is provided with an outwardly inclined slope. The slider 600 is arranged on the slope of the wedge block 410 and can move relatively along the slope. Due to the arrangement of the slope, the movement of the slider 600 can be decomposed into an axial up-and-down movement and a radial inward-and-outward movement. That is, the slider 600 moves radially with the axial movement of the adjustment seat 400. When the eccentric wheel 500 and the adjustment seat 400 rotate as a whole group, the radial movement of the slider 600 changes with the axial movement of the adjustment seat 400, causing the slider 600 to drive the driving link 800 to change the radial dimension of the distance from driving link 800 to the motor rotation center, thereby achieving the adjustment of the linear movement depth of the massage member 940. A top end of the slider 600 is connected to a shaft hole in the center end 810 of the driving link 800. The driver 910 includes a driving motor.

In this embodiment, the axial adjustment assembly specifically includes an adjustment knob 100, an adjustment gear disk 200, and an adjustment ring 300. The adjustment knob 100 is provided with external teeth that mesh with the external teeth of the adjustment gear disk 200. The rotation of the adjustment knob 100 can drive the adjustment gear disk 200 to rotate. The adjustment gear disk 200 and the adjustment ring 300 are in a threaded engagement, enabling relative circumferential rotation and relative axial movement between the adjustment gear disk 200 and the adjustment ring 300. The adjustment seat 400 is disposed in the adjustment ring 300 and can move axially with the adjustment ring 300. Specifically, in the embodiment where the adjustment knob 100 is provided, a part of the adjustment knob 100 is exposed outside the massage apparatus, facilitating the user to push and rotate. In other embodiments, the adjustment knob 100 may not be provided, and the adjustment gear disk 200 can be directly pushed to rotate. A part of the adjustment gear disk 200 can be exposed outside the massage apparatus, facilitating the user to push and rotate.

A positioning frame 510 is provided on one side of the axis of the eccentric wheel 500. The slider 600 is disposed in the positioning frame 510 so that the slider 600 and the eccentric wheel 500 rotate synchronously. Specifically, the positioning frame 510 consists of two arms with a certain spacing. The spacing between the two arms matches a width of the slider 600, positioning the slider 600 circumferentially to rotate synchronously with the eccentric wheel 500. Meanwhile, the inner sides of the two arms of the positioning frame 510 are provided with sliding grooves that cooperate with the slider 600, allowing the slider 600 to slide radially relative to the axis of the eccentric wheel 500 along the positioning frame 510, thereby changing the distance of the slider 600 from the axis.

The output end of the driver 910 is coupled to a drive rotating shaft 911. The eccentric wheel 500, the adjustment seat 400, the adjustment ring 300, and the adjustment gear disk 200 are all sleeved on the drive rotating shaft 911. The eccentric wheel 500 and the adjustment seat 400 can rotate synchronously with the drive rotating shaft 911. In specific embodiments, the drive rotating shaft 911 and the driver 910 can be designed as two separate components or directly designed as an integral unit.

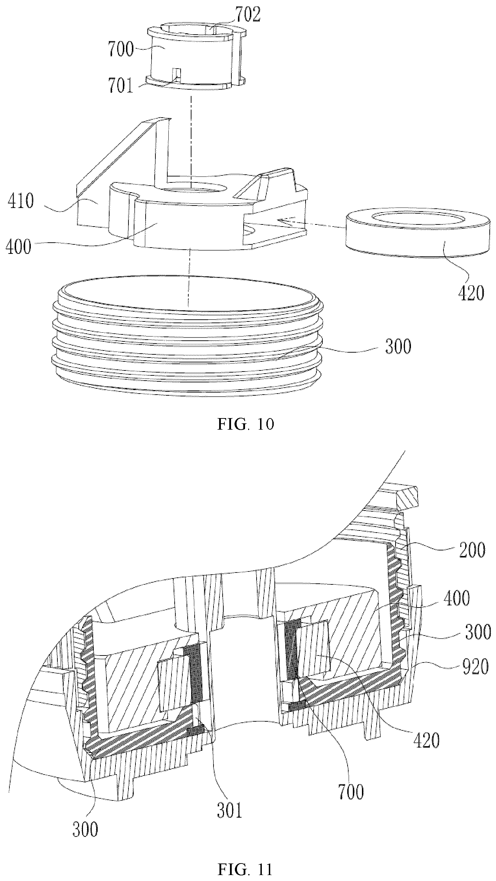

Please refer to FIGS. 10 and 11, a collar 700 is provided between the drive rotating shaft 911 and the adjustment seat 400, and the positioning cooperation between the adjustment seat 400 and the collar 700 enables the collar 700 and the adjustment ring 300 to rotate synchronously relative to the drive rotating shaft 911. Specifically, the adjustment ring 300 is provided with radial protrusions 301, which are positioned in cooperation with the grooves 701 formed on the outer periphery of the collar 700; the adjusting ring 300 and the collar 700 move axially (i.e., rise/fall) together within the grooves 701.

A bearing 420 sleeved between the drive rotating shaft 911 and the adjustment seat 400 is further provided inside the adjustment seat 400, enabling the adjustment seat 400 to perform radial movement around the rotation center of the drive rotating shaft 911. Bearings 801 are also provided in the center end 810 of the driving link 800 connected to the slider 600 and in the pulling end 820 connected to the massage member 940.

Referring to FIGS. 1, 4, 6, and 8, the massage apparatus further includes a bracket 920 sleeved on the drive rotating shaft 911 and a limiting plate 923 that cooperates with and is fixed to the bracket 920. A circular hole is defined in the middle of the limiting plate 923. A central shaft 921 is provided in the bracket 920. The central shaft 921 passes through the circular hole of the limiting plate 923. The adjusting mechanism and the adjustment seat 400 are disposed in the bracket 920 and sleeved on the central shaft 921. The diameter of the circular hole of the limiting plate 923 is adapted to the diameter of the adjustment ring 300 and smaller than the diameter of the adjustment gear disk 200, allowing the adjustment ring 300 to move up and down through the circular hole while the adjustment gear disk 200 and the adjustment knob 100 are both limited below the limiting plate 923 and cannot move up and down. In a specific embodiment, the bracket 920 and the limiting plate 923 are fixed through the engagement of screw holes and screws.

A groove 922 is provided on the outer circumference of the central shaft 921. A protrusion 702 is further formed inside the collar 700 adapted to the groove 922 provided on the outer circumference of the central shaft 921, and the collar 700 and the adjustment seat 400 move axially relative to the central shaft 921.

The eccentric wheel 500 and the drive rotating shaft 911 are positioned in cooperation through a radially inserted pin 501 or a screw, enabling the eccentric wheel 500 and the drive rotating shaft 911 to rotate synchronously.

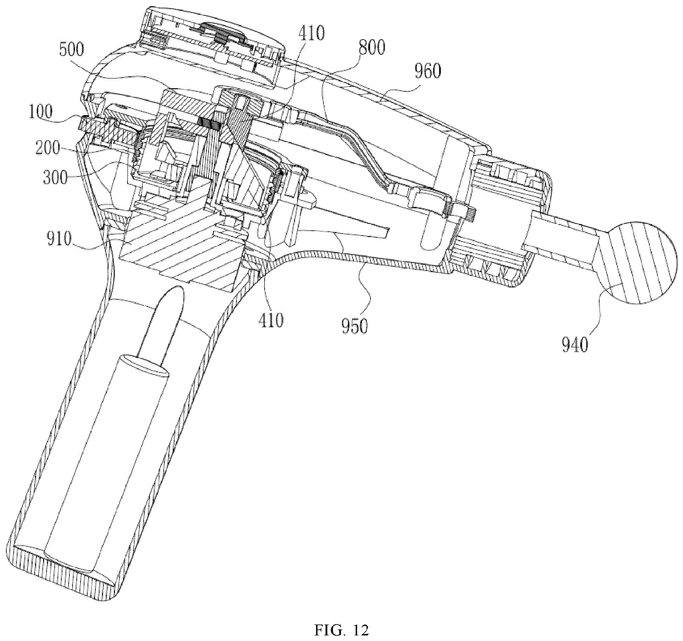

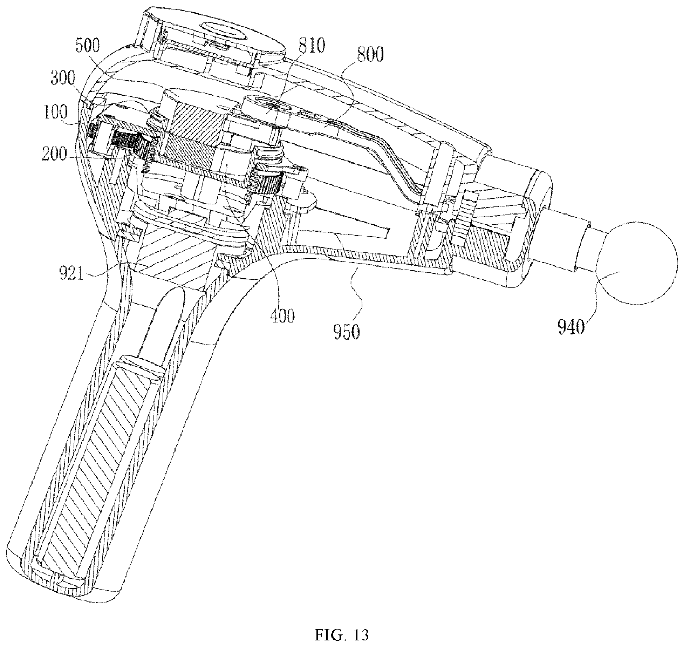

Referring to FIGS. 12 and 13, the massage apparatus further includes a piston 930, a shock-absorbing sleeve 931, and a housing. The pulling end 820 of the driving link 800 is connected to one end of the piston 930. The massage member 940 is sleeved in the piston 930 and moves along with the piston 930. The piston 930 is disposed in the housing and can be partially exposed outside the housing. The shock-absorbing sleeve 931 is provided between the piston 930 and the housing. The length of the piston 930 extending outside the housing is matched with the maximum distance between the center end 810 of the driving link 800 and the rotation center of the driver, which can be the same length as the maximum distance or longer than the maximum distance, thereby ensuring that the massage member 940 has sufficient movement space for adjustable movement depth. The distance between the rotation center of the driver 910 and the center end 810 of the driving link 800 determines the diameter of the circular motion that the center end makes, thereby determining the dimensional depth of the reciprocating motion of the front piston 930. The spatial dimension of the linear reciprocating motion is determined by the radial dimension between the driving link 800 and the rotation center of the driver 910.

The massage apparatus further includes a PCBA board 961, a button 962, a panel 963, a handle 970, and a battery 980. The housing includes an upper shell 960 and a lower shell 950. The PCBA board 961, the button 962, and the panel 963 are disposed on the upper shell 960. The handle 970 is connected to the lower shell 950. The battery 980 is disposed in the handle 970. A shock-absorbing pad 971 is provided at the connection between the handle 970 and the lower shell 950.

This application can adjust the radial dimension between the connection center of the driving link 800 and the motor rotation center both in the working state and non-working state of the fascia gun, making the connection center of the driving link 800 approach or move away from the motor rotation center, thereby realizing an eccentric radial dimension change to adjust the movement depth of the massage member 940 and meeting the different massage needs of users, which is very flexible and convenient.

The above descriptions are only preferred embodiments of this application. The protection scope of this application is not limited thereto. Any equivalent transformations based on the technical solutions of this application fall within the protection scope of this application.

## Claims

1. A massage apparatus, **characterised in that**, comprising a driver, a driving link, a massage member, an adjusting mechanism, an eccentric wheel, and a slider; an output end of the driver is coupled to the eccentric wheel to drive the eccentric wheel to rotate, the slider is arranged on one side of an axis of the eccentric wheel and is radially movable relative to the axis of the eccentric wheel; a motion of the adjusting mechanism drives the slider to move radially relative to the axis of the eccentric wheel; the slider is connected with a center end of the driving link to adjust a distance between the center end of the driving link and the axis of the eccentric wheel, and a pulling end of the driving link is connected with the massage member.

2. The massage apparatus as claimed in claim **1, characterised in that**, the adjusting mechanism comprises an axial adjusting assembly and an adjustment seat, the axial adjusting assembly drives the adjustment seat to move along an axial direction to adjust an axial distance between the adjustment seat and the eccentric wheel, the adjustment seat is provided with a wedge block on one side of the axis, and the wedge block is provided with an outwardly inclined slope, and the slider is arranged on the slope of the wedge block and is movable relatively along the slope.

3. The massage apparatus as claimed in claim **2, characterised in that**, the axial adjustment assembly includes an adjustment gear disk and an adjustment ring, the adjustment ring is sleeved in the adjustment gear disk, the adjustment gear disk and the adjustment ring are in threaded engagement, allowing the adjustment gear disk and the adjustment ring to rotate relatively in a circumferential direction while moving relatively in the axial direction, the adjustment seat is located in the adjustment ring and is movable along the axial direction with the adjustment ring.

4. The massage apparatus as claimed in claim **3, characterised in that**, a positioning frame is provided on one side of the axis of the eccentric wheel, and the slider is arranged in the positioning frame so that the slider is rotatable synchronously with the eccentric wheel.

5. The massage apparatus as claimed in any of claims 1 to 4, **characterised in that**, the output end of the driver is coupled to a drive rotating shaft; the eccentric wheel, an adjustment seat, an adjustment ring, and an adjustment gear disk are all sleeved on the drive rotating shaft; and the eccentric wheel and the adjustment seat are rotatable synchronously with the drive rotating shaft.

6. The massage apparatus as claimed in claim **5, characterised in that**, the axial adjustment assembly further includes an adjustment knob, which is provided with external teeth that mesh with external teeth of the adjustment gear disk.

7. The massage apparatus as claimed in claim 6, **characterised in that**, a collar is provided between the drive rotating shaft and the adjustment seat, and a positioning cooperation between the adjusting seat and the collar enables the collar and the adjusting ring to rotate synchronously relative to the drive rotating shaft.

8. The massage apparatus as claimed in claim **5, characterised in that**, further comprising a bracket, the bracket is provided with a hollow central shaft, the drive rotating shaft passes through the central shaft, and the adjusting mechanism and the adjustment seat are arranged in the bracket and sleeved on the central shaft.

9. The massage apparatus as claimed in claim **7, characterised in that**, a groove is defined on an outer peripheral wall of the central shaft; and a protrusion is formed inside the collar, which cooperates with the groove on the outer periphery of the central shaft, whereby the collar and the adjustment seat is movable axially relative to the central shaft.

10. The massage apparatus as claimed in claim **5, characterised in that**, the eccentric wheel and the drive rotating shaft are positioned in cooperation via a radially inserted pin or screw, enabling the eccentric wheel to rotate synchronously with the drive rotating shaft.
